# EUROPEAN PATENT APPLICATION

(11) **EP 4 175 146 A1**
(43) Date of publication of application: **03.05.2023**
(21) Application number: 21206053.7
(22) Date of filing: 02.11.2021
(51) Int. Cl.: H02M 1/44, B32B 17/10, B60J 3/06, H02M 7/5387

(54) **DRIVE CIRCUITRY FOR AN OPTICALLY SWITCHABLE PANEL, A VEHICLE ROOF ASSEMBLY PROVIDED WITH SUCH DRIVE CIRCUITRY AND METHOD FOR DRIVING AN OPTICALLY SWITCHABLE PANEL**

(71) Applicant: Inalfa Roof Systems Group B.V., 5807 GW Oostrum (NL)
(72) Inventor: Schwepper, Gerrit, 45475 Kamp-Lintfort (DE)
(74) Representative: De Vries & Metman

(57) **Abstract**

In a drive circuitry for outputting a drive voltage to an optically switchable panel, the drive voltage is an alternating (AC) drive voltage. In an operating state of the drive circuitry, the drive voltage is supplied to the optically switchable panel. In said operating state, the drive circuitry is configured to vary the drive frequency of the alternating drive voltage without affecting an optical state of the optically switchable panel.

## Description

The invention relates to a drive circuitry for an optically switchable panel and a method for driving an optically switchable panel. Further, the invention relates to a vehicle roof assembly provided with such drive circuitry.

An open-roof assembly is well-known. The open-roof assembly is configured to be mounted in a vehicle roof and comprises at least one moveably arranged closure member. The closure member is configured and arranged to cover an opening in the vehicle roof or at least partly uncover the opening in the vehicle roof. Usually, but not necessarily, the closure member is a transparent panel and comprises glass or a suitable plastics. The closure member may be configured to tilt or to slide.

Further, it is known to provide a fixed, usually transparent panel in the vehicle roof of a passenger compartment to enable a sky view through the roof of the vehicle, for example, for any occupants in the passenger compartment.

In either of the above-mentioned vehicle roofs, a transparent panel may be optically switchable. An optically switchable panel, as used herein, is a panel of which an optical property may be changed by an occupant. In particular, the optical property of the optically switchable panel may be changed by application of an electric field. Different kinds of such an optically switchable panel are known. For example, an electrochromic panel is known and a number of kinds of such a panel applying a liquid crystal layer are known. Some examples of the latter kind comprise a PDLC (polymer dispersed liquid crystal) layer, a SPD (suspended particle device) layer or a GHLC (guest host liquid crystal) layer.

The optically switchable panel may comprise two electrode layers between which an optically switchable material is provided. A suitable electric voltage may be applied on these electrodes to thereby provide an electric field between the electrodes. The electric field induces the change of the optical property of the optically switchable material.

Depending on the kind of switchable material applied, the electric voltage may be preferred to be an alternating (AC) voltage instead of a DC voltage. Due to the relatively large electrodes and the limited possibilities to shield the electrodes, electromagnetic radiation may be emitted. Depending on a frequency of the electromagnetic radiation, the radiation may be received by other electric systems may thereby disturb such other electric systems. E.g. due to the large number of different wireless communication systems, a relatively large number of electric systems may be susceptible to such disturbance. It is therefore desirable to provide a drive circuitry for driving an optically switchable panel, wherein disturbance in other electric systems is reduced.

In a first aspect, a drive circuitry according to claim 1 is provided. The drive circuitry is configured to output a drive voltage to an optically switchable panel, wherein the drive voltage is an alternating (AC) drive voltage having a drive frequency. The optically switchable panel comprises a first optical state and a second optical state different from the first optical state. The drive circuitry comprises a first operating state and a second operating state. In the first operating state no drive voltage is supplied to the optically switchable panel such that the switchable panel is in the first optical state. In the second operating state, the drive voltage is supplied to the optically switchable panel such that the optically switchable panel is in the second optical state. Further, in the second operating state, the drive circuitry is configured to vary the drive frequency of the alternating drive voltage without affecting the second optical state of the optically switchable panel.

When, in the second operating state, the AC voltage is supplied to the optically switchable panel, the electromagnetic radiation is emitted at a certain frequency that depends *inter alia* on the drive frequency. With a constant drive frequency, radiation with a constant frequency is emitted. Another electric system susceptible to such constant frequency may be continuously disturbed by the emitted radiation and may potentially even get damaged due to resonance effects. Varying the drive frequency inevitably varies the frequency of the emitted radiation, alleviating the disturbance in the above-mentioned other electric system.

In an embodiment of drive circuitry, the alternating drive voltage is a non-sinusoidal voltage signal, in particular a square-wave or trapezoid voltage signal. Such a voltage signal may be relatively easily generated from a DC voltage that may be available in a vehicle from its battery. Further, a DC-voltage component of the alternating drive voltage may be about 0 V. Such a low DC voltage prevents deterioration of and damage to the optically switchable panel.

In an embodiment of drive circuitry, the alternating voltage comprises a first voltage wave and a second voltage wave, wherein the second voltage wave occurs subsequent to the first voltage wave, a wave length of the second voltage wave being different than a wave length of the first voltage wave. In this embodiment, the drive frequency is regularly changed. It may even be changed with every new cycle of the alternating wave. Thus, the drive frequency is changed over time. Consequently, the frequency of the emitted radiation is changed over time as well and thus occurs in a short period of time. This reduces the disturbance in any other electric system as such electric system is usually not susceptible to every frequency.

Further, with respect to wireless communication, many wireless communication protocols are designed to be able to detect a disturbance and to correct any missed data, e.g. data missed due to the disturbance. With changing disturbance frequency, data loss due to electromagnetic disturbance will be minor. The wireless communication protocol may be expected to be able correct such minor data loss, whereas a constant drive frequency may be expected to continuously disturb the wireless communication, potentially blocking communication completely.

Any frequencies present in the emitted radiation may be varied as well by varying an amplitude of the alternating drive voltage. However, in view of driving the optically switchable panel, it may be preferred to maintain the amplitude constant.

In an embodiment, the drive circuitry comprises a set of input terminals for receiving a DC supply voltage, a set of output terminals for outputting the alternating drive voltage and switching circuitry connected between the set of input terminals and the set of output terminals, wherein the switching circuitry comprises a number of transistor devices in a bridged configuration and a control device for controlling the transistor devices.

By supplying a DC voltage to the set of input terminals and suitably controlling the transistor devices, an alternating drive voltage may be generated. Timing of the switching of the transistor devices determines the drive frequency. The control device, configured to control the transistor devices, may be configured to control such timing and is thus a simple embodiment enabling the control of drive frequency. The control device may be instructed by another electronic system to vary the drive frequency. In a particular embodiment, the control device is configured to vary and control the drive frequency itself. For example, the control device may be configured to select another wave length for each subsequent cycle of the alternating drive voltage.

In another example, the control device is operatively coupled to a further electronic circuitry and the control device varies the drive frequency in dependence on an electromagnetic disturbance in the further electronic circuitry. In a vehicle, in particular on a vehicle roof an antenna, for wireless communication or for receiving radio signals, or a sensitive sensor may be present. In particular, sensors assisting or even controlling the driving of the vehicle may be present on the vehicle roof. Such a further electronic circuitry may be designed and configured to detect electromagnetic disturbances. Upon detection of such a disturbance, a detection signal may be supplied to the control device. Based on the detection signal, the control device may change the drive frequency until the further electronic circuitry indicates that no disturbance occurs anymore. Thus, varying the drive frequency of the alternating drive voltage may be used to tune the frequency of the emitted radiation to a frequency that does not disturb any other electronic circuitry or at least does not disturb any critical electronic circuitry in the vehicle. In a particular embodiment, after such tuning, the drive frequency may be constant over time or may be varied over time as above described. In the latter case, detected disturbing drive frequencies may be disregarded by the control device, thus only using not-disturbing drive frequencies.

In an aspect, a vehicle roof assembly for mounting in a vehicle roof is provided. The vehicle roof assembly comprises an optically switchable panel and the above-described drive circuitry. The drive circuitry is operatively coupled to the optically switchable panel for controlling an optical state of the optically switchable panel.

In an aspect, a vehicle comprising the above-mentioned vehicle roof assembly is provided. The vehicle further comprises a further electronic circuitry and the drive circuitry is configured to vary the drive frequency of the alternating drive voltage such that operation of the further electronic circuitry is not disturbed.

In a particular embodiment thereof, the drive circuitry comprises a control unit and the control unit is configured to vary the drive frequency. The further electronic circuitry is operatively coupled to the control unit. The control device varies the drive frequency in dependence on a detected electromagnetic disturbance in the further electronic circuitry.

In another aspect, a method for reducing electromagnetic disturbances in a vehicle is provided. The vehicle comprises an optically switchable panel. The optically switchable panel is in a first optical state when no drive voltage is supplied to the optically switchable panel. The method comprises supplying an alternating drive voltage, the alternating drive voltage alternating at a drive frequency, to the optically switchable panel to switch the optically switchable panel from the first optical state to a second optical state; varying the drive frequency of the alternating drive voltage to vary a radiation frequency of an electromagnetic radiation emitted by the optically switchable panel.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description with reference to the appended schematical drawings, in which:
- Fig. 1A: shows a perspective view of a vehicle roof with an open roof assembly;
- Fig. 1B: shows an exploded view of the open roof assembly of Fig. 1A;
- Fig. 2: shows a diagram of a first embodiment of a driver circuitry for supplying a drive voltage to an optically switchable panel;
- Fig. 3A: shows a graph of an exemplary embodiment of an alternating drive voltage with a constant drive frequency;
- Fig. 3B: shows a graph of a frequency content of the alternating drive voltage of Fig. 3A;
- Fig. 4A: shows a graph of an exemplary embodiment of an alternating drive voltage with a varying drive frequency;
- Fig. 4B: shows a graph of a frequency content of the alternating drive voltage of Fig. 4A; and
- Fig. 5: shows a diagram of a second embodiment of a driver circuitry for supplying a drive voltage to an optically switchable panel.

The present invention will now be described with reference to the accompanying drawings, wherein the same reference numerals have been used to identify the same or similar elements throughout the several views.

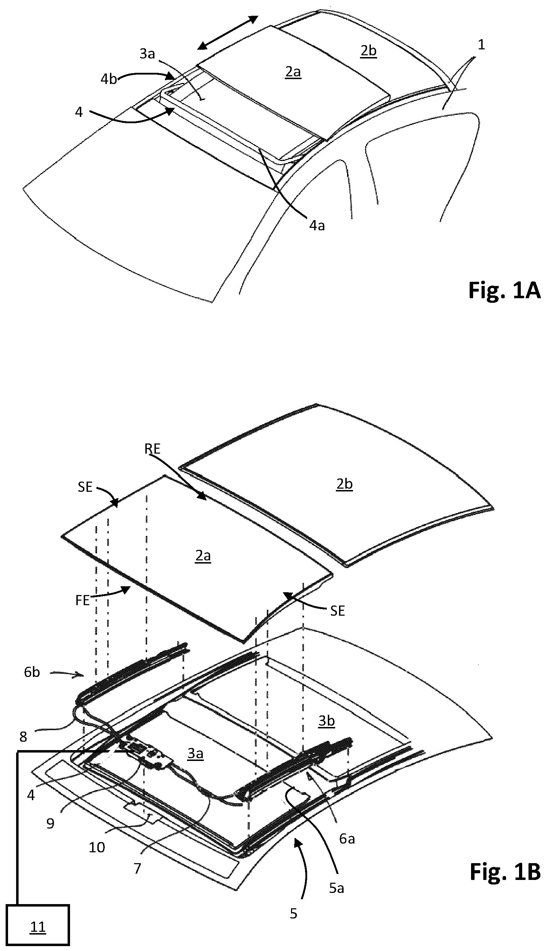

Fig. 1A illustrates a vehicle roof 1 having an open roof assembly arranged therein. The open roof assembly comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly in the open position, Fig. 1B is an exploded view of the open roof assembly in a closed position. Further, in this exploded view of Fig. 1B, it is shown that there is a second roof opening 3b. The first and second roof openings 3a, 3b are provided in a frame 5 of the open roof assembly. An edge 5a of the frame 5 defines the first roof opening 3a.

The second roof opening 3b is arranged under the fixed panel 2b such that light may enter a vehicle interior passenger compartment through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly.

The wind deflector 4 is commonly a flexible material, e.g. a woven or non-woven cloth having through holes arranged therein or a web or net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts air flow when the moveable panel 2a is in the open position. In its raised position, the wind deflector 4 reduces inconvenient noise due to air flow during driving. When the moveable panel 2a is in the closed position or in the tilted position, the wind deflector 4 is held down below the front end FE of the moveable panel 2a.

Usually, the wind deflector 4 is raised by a spring force when the moveable panel 2a slides to an open position and the wind deflector 4 is pushed down by the moveable panel 2a when the moveable panel 2a slides back into its closed position. In Fig. 1A, the moveable panel 2a is shown in an open position and the wind deflector 4 is shown in a raised position. In Fig. 1B, the moveable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8. The first and second guide assemblies 6a, 6b are arranged on respective side ends SE of the moveable panel 2a and may each comprise a guide and a mechanism. The guide is coupled to the frame 5, while the mechanism comprises moveable parts and is slideably moveable in the guide. The first and the second drive cables 7, 8 are provided between the mechanisms of the respective guide assemblies 6a, 6b and a electric motor 9.

The drive cables 7, 8 couple the electric motor 9 to the mechanisms of the respective guide assemblies 6a, 6b such that upon operating the electric motor 9, the mechanisms start to move. In particular, a core of the drive cable 7, 8 is moved by the electric motor 9 such to push or pull on the mechanisms of the respective guides 6a, 6b. Such a drive assembly is well known in the art and is therefore not further elucidated herein. Still, any other suitable drive assembly may be employed as well without departing from the scope of the present invention. Moreover, in a particular embodiment, an electric motor may be operatively arranged between the respective guides and the respective mechanisms of the guide assemblies 6a, 6b and, in such embodiment, a drive assembly may be omitted completely.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the electric motor 9 is mounted near or below the front end FE of the moveable panel 2a at a recess 10. In another embodiment, the electric motor 9 may be positioned at any other suitable position or location. For example, the electric motor 9 may be arranged near or below the rear end RE of the moveable panel 2a or below the fixed panel 2b.

A control module 11 is schematically illustrated and is operatively coupled to the electric motor 9. The control module 11 may be any kind of processing module, either a software controlled processing module or a dedicated processing module, like an ASIC, which are both well known to those skilled in the art. The control module 11 may be a stand-alone control module or it may be operatively connected to another control module, like a multipurpose, generic vehicle control module. In yet another embodiment, the control module 11 may be embedded in or be part of such a generic vehicle control module. Essentially, the control module 11 may be embodied by any control module suitable for, capable of and configured for performing operation of the electric motor 9 and thus the moveable roof assembly.

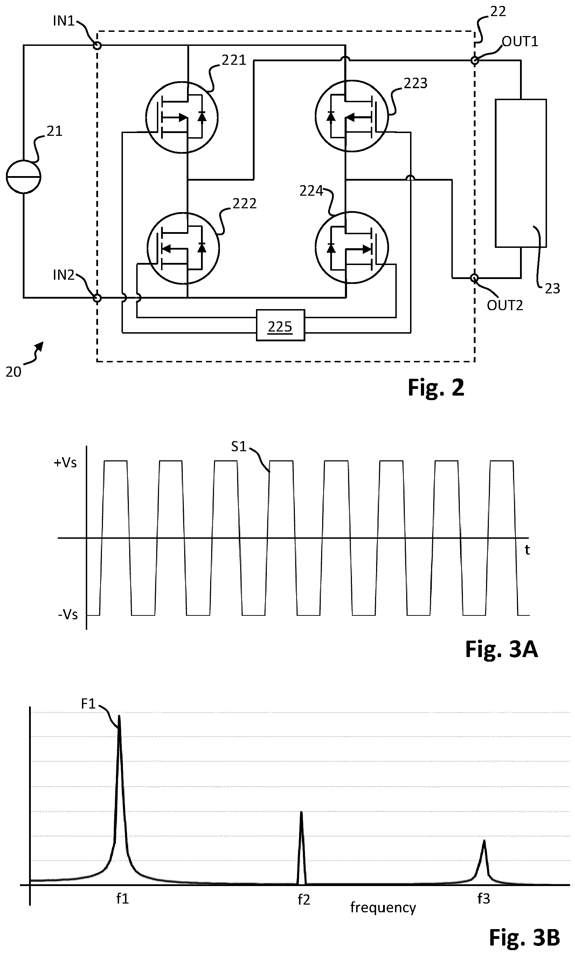

Either or both of the moveable panel 2a and the fixed panel 2b may be an optically switchable transparent panel. Fig. 2 illustrates a driver circuitry 20 for driving and operating an optically switchable layer present in such an optically switchable transparent panel, as well known in the art. Such known layers include a PDLC, SPD, GHLC and electrochromic layers and other layers having optically switchable properties, wherein an optically switchable material is operated by applying an electric field by application of a drive voltage between at least two electrode layers, between which the optically switchable material is arranged. As such optically switchable layers are well known in the art, a more detailed description thereof is omitted herein.

The drive voltage applied on the electrode layers may be preferred to be an alternating drive voltage, as known in the art. Such an alternating drive voltage may have any suitable wave shape, e.g. sinusoidal or non-sinusoidal, like rectangular or trapezoidal. The drive circuitry 20 of Fig. 2 is suited to generate and output an essentially rectangular shaped alternating drive voltage, while due to circuit properties the rectangular shape may become trapezoidal in practice. Other drive circuitries may be designed and configured to generate an essentially trapezoidal alternating drive voltage, wherein in a particular embodiment properties of the trapezoidal shape may be controlled and varied. However, a too slow rise and fall of the trapezoid may adversely affect the optical properties of the driven optically switchable panel.

The driver circuitry 20 Fig. 2 comprises a voltage source 21, a switching circuitry 22 and an optically switchable layer 23. The optically switchable layer 23 may be arranged in a laminated window of a vehicle, in particular in a laminated glazing used in a vehicle roof, like the moveable panel 2a or the fixed panel 2b of Fig. 1A.

The voltage source 21 supplies a DC source voltage to a set of input terminals IN1, IN2 of the switching circuitry 22. The alternating drive voltage is supplied to the optically switchable layer 23, which is connected to the switching circuitry 22 at a set of output terminals OUT1, OUT2.

In this embodiment, the switching circuitry 22 comprises four switching devices, for example transistor devices, in particular MOSFET's 221, 222, 223 and 224, which are connected in a bridged configuration, in particular an H-bridge, which is well known in the art. A control device 225 is provided and coupled to a control terminal of each of the four transistor devices 221-224. Thus, the control device 225 is configured to control switching of each of the transistor devices 221-224 between conductive and non-conductive.

In an embodiment, the control device 225 is configured to receive a command from another control unit indicating a timing for the switching operation and consequently a drive frequency, which is a frequency of the alternating drive voltage. In another embodiment, the control device 225 is configured to determine the drive frequency and to adapt the timing of the switching of the transistor devices 221-224 accordingly such to appropriately vary the drive frequency. Basic operation of the switching circuitry is known in the art and is not further elucidated herein.

The voltage source 21 may be a vehicle battery, possibly further comprising a converter circuitry for increasing the supply voltage. Commonly, a vehicle battery supplies about 12 V, whereas the optically switchable layer may require from about 30V to more than 100 V. Increasing a low DC voltage to a higher DC voltage may be performed by several known circuitries and is not further elucidated herein.

The drive circuitry 20 comprises a first operating state and a second operating state. In the first operating state, the drive circuitry 20 no drive voltage is applied on the set of output terminals OUT1, OUT2. Without a drive voltage applied on the electrode layers of the optically switchable layer, the optically switchable layer 23 is in a first optical state. For an optically switchable layer 23 that comprises a liquid-crystal based optically switchable material, the first optical state is usually a darkened or a blurry, hazy state. In the second operating state, the alternating drive voltage is applied on the set of output terminals OUT1, OUT2. With the alternating drive voltage applied on the electrode layers of the optically switchable layer 23, the optically switchable layer 23 is in a second optical state, which is different from the first optical state. For an optically switchable layer 23 that comprises a liquid-crystal based optically switchable material, the second optical state is usually a clear state.

Fig. 3A illustrates a graph of a first alternating drive voltage S1 having a constant drive frequency. The first alternating drive voltage S1 alternates, at the drive frequency, between a voltage of +Vs, equal to the voltage of the voltage source 21, to -Vs. The first alternating drive voltage S1 may be essentially rectangular (e.g. generated by the switching circuitry of Fig. 2), but, due to circuit properties, the rectangular shape may become trapezoidal, as shown.

Fig. 3B shows a graph of a first Fourier-transformed signal F1 of the first alternating drive voltage S1. It is apparent from Fig. 3B that a small number of frequencies f1, f2, f3 are present in the first alternating drive voltage S1, wherein the first frequency f1 corresponds to the drive frequency. As the drive frequency is constant, the first frequency and all other frequencies f2, f3 are constantly present in the first alternating drive voltage S1.

When the first alternating drive voltage S1 is supplied to the optically switchable layer, the electrodes of the optically switchable layer may emit electromagnetic radiation at a certain radiation frequency which depends, *inter alia,* on the frequencies f1, f2, f3 present in the first alternating drive voltage S1. As these frequencies are constantly present during operation of the optically switchable layer, the emission of any electromagnetic radiation is at a constant radiation frequency and continuous. Any electric or electronic circuit sensitive to such electromagnetic radiation at said radiation frequency will be disturbed continuously and may even be damaged. If said radiation at said radiation frequency interferes with a wireless communication radiation, such wireless communication may become disturbed to the extent that it no longer works.

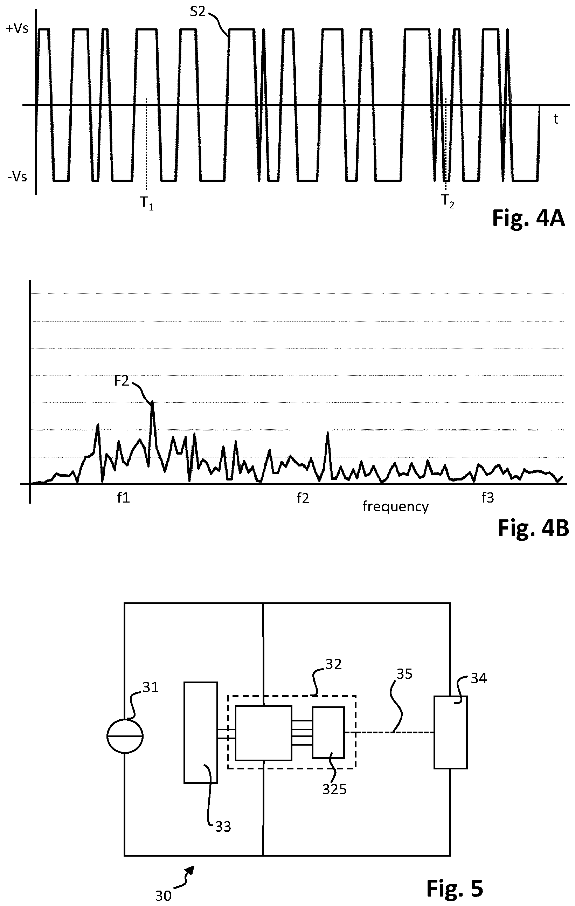

Fig. 4A illustrates a graph of a second alternating drive voltage S2 having a varying drive frequency. The second alternating drive voltage S2 alternates, at a varying drive frequency, between a voltage of +Vs, equal to the voltage of the voltage source 21, to -Vs. The second alternating drive voltage S2 may be essentially rectangular (e.g. generated by the switching circuitry of Fig. 2), but, due to circuit properties, the rectangular shape may become trapezoidal, as shown.

In the alternating drive voltage S2, a cycle time of each subsequent cycle of the alternating drive voltage S2 is changed. So, with each new cycle, the frequencies present in the alternating drive voltage S2 change. In another embodiment, changes in cycle time (and thus in frequencies) may be performed after two or more cycles or after a predetermined amount of time, e.g. after each predetermined number of milliseconds, or the like.

Fig. 4B shows a graph of a second Fourier-transformed signal F2 which is derived from the second alternating drive voltage S2. It is apparent from Fig. 4B that the peaks in the graph of Fig. 3B at the frequencies f1, f2, f3 are strongly reduced, whereas many other frequencies over the full spectrum are more present. It should be borne in mind that the Fourier spectrum of the second alternating drive voltage S2 represents the frequencies present over the whole time period shown in Fig. 4A. In practice, at any point in time, e.g. at T₁ (Fig. 4A), only some of the frequencies in the spectrum shown in Fig. 4B are present in the alternating drive voltage S2, whereas at T₂, other frequencies are present. Hence, over time, the frequencies present in the alternating drive voltage S2 vary.

When the second alternating drive voltage S2 is supplied to the optically switchable layer 23, the electrodes of the optically switchable layer 23 may emit electromagnetic radiation at over time varying radiation frequencies. As these frequencies vary during operation of the optically switchable layer 23, the emission of any electromagnetic radiation is at varying radiation frequencies. Any electric or electronic circuit may be disturbed at a certain point in time, when a particular frequency, to which such electric or electronic circuit is sensitive, is present in the electromagnetic radiation. However, such disturbance will be for a very short period of time and the disturbance is thus significantly reduced compared to the use of the first alternating drive voltage S1 of Fig. 3A. Moreover, most wireless communication protocols are configured to handle such short electromagnetic interference and will thus remain functional.

Fig. 5 illustrates a second embodiment of a driver circuitry 30 comprising a voltage source 31, a switching circuitry 32, an optically switchable layer 33, a further electronic circuitry 34 and an operative coupling 35. The voltage source 31, the switching circuitry 32 and the optically switchable layer 33 may be the same or similar to the voltage source 21, the switching circuitry 22 and the optically switchable layer 23 of Fig. 2, or one or more of those elements may be embodied differently, but functionally these elements are the same. A detailed description of their operation is provided hereinabove with reference to Fig. 2.

The further electronic circuitry 34 may be any kind of electronic circuitry susceptible to electromagnetic radiation. In a vehicle, for example, the further electronic circuitry 34 may comprise a sensor used for driving assistance, like a radar device or a camera system, or the like, or it may comprise an antenna for wireless communication or radio reception, or the like. The further electronic circuitry 34 is operatively coupled to a control device 325 of the switching circuitry 32 through an operative coupling 35. The operative coupling 35 may comprise a direct coupling, e.g. through an electrically conductive lead, an optical connection or a wireless connection, although the latter may not be preferred considering the potential interference from the optically switchable layer 33. The operative coupling 35 may be indirect as well, meaning that further electronic components, e.g. control units or the like, may be present in the operative coupling 35.

The further electronic circuitry 34 is configured to detect an electromagnetic radiation interference. Upon detection thereof, the further electronic circuitry 34 generates a corresponding signal and sends such signal to the control device 325. In response to the signal, the control device 325 varies and adapts the alternating drive voltage. In an embodiment wherein an essentially constant drive frequency is used, the control device 325 may vary the constant drive frequency until the further electronic circuitry 34 is no longer disturbed. In an embodiment wherein the drive frequency is varied over time, the control device 325 may exclude, or at least reduce, the disturbing frequency from the alternating drive voltage.

It is noted that it may be preferred to design the optically switchable layer such that no disturbing electromagnetic radiation is emitted. However, it is not possible to electromagnetically isolate the electrode layers without hampering the intended optical function and it is virtually impossible to predict any emitted frequencies during the design stage. Enabling a variable frequency of the alternating drive voltage eases the requirements and enables to reduce any adverse effects due to any emitted electromagnetic radiation.

In a particular embodiment, the control device 325 may be configured to apply an artificial intelligence algorithm to identify or select a most suitable, i.e. a least interfering alternating drive voltage. Optionally, in such embodiment, the switching circuitry may be configured to output different wave shapes of the alternating drive voltage, providing even more freedom in selecting a suitable alternating drive voltage.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described it is apparent that the same may be varied in many ways. Such variations are not to be regarded as a departure from the spirit and scope of the invention, and all such modifications as would be apparent to one skilled in the art are intended to be included within the scope of the following claims.

## Claims

1. A drive circuitry for outputting a drive voltage to an optically switchable panel, wherein the drive voltage is an alternating (AC) drive voltage having a drive frequency,
the optically switchable panel comprising a first optical state and a second optical state different from the first optical state,
the drive circuitry comprising a first operating state and a second operating state, wherein in the first operating state no drive voltage is supplied to the optically switchable panel such that the switchable panel is in the first optical state and in the second operating state the drive voltage is supplied to the optically switchable panel such that the optically switchable panel is in the second optical state, and
wherein, in the second operating state, the drive circuitry is configured to vary the drive frequency of the alternating drive voltage without affecting the second optical state of the optically switchable panel.

2. The drive circuitry according to claim 1, wherein the alternating drive voltage is a non-sinusoidal voltage signal, in particular a square-wave or trapezoid voltage signal.

3. The drive circuitry according to claim 1, wherein a DC-voltage component of the alternating drive voltage is about 0 V.

4. The drive circuitry according to claim 1, wherein the alternating voltage comprises a first voltage wave and a second voltage wave, wherein the second voltage wave occurs subsequent to the first voltage wave, a wave length of the second voltage wave being different than a wave length of the first voltage wave.

5. The drive circuitry according to claim 4, wherein an amplitude of the first voltage wave is the same as an amplitude of the second voltage wave.

6. The drive circuitry according to claim 1, wherein the drive circuitry comprises a set of input terminals for receiving a DC supply voltage, a set of output terminals for outputting the alternating drive voltage and switching circuitry connected between the set of input terminals and the set of output terminals, wherein the switching circuitry comprises a number of transistor devices in a bridged configuration and a control device for controlling the transistor devices.

7. The drive circuitry according to claim 6, wherein the control device is configured to vary the drive frequency.

8. The drive circuitry according to claim 7, wherein the control device is configured to select another wave length for each subsequent cycle of the alternating drive voltage.

9. The drive circuitry according to claim 7, wherein the control device is operatively coupled to a further electronic circuitry and wherein the control device varies the drive frequency in dependence on an electromagnetic disturbance in the further electronic circuitry.

10. A vehicle roof assembly for mounting in a vehicle roof, the vehicle roof assembly comprising an optically switchable panel and a drive circuitry according to claim 1, the drive circuitry being operatively coupled to the optically switchable panel for controlling an optical state of the optically switchable panel.

11. A vehicle comprising the vehicle roof assembly according to claim 10, wherein the vehicle further comprises a further electronic circuitry and wherein the drive circuitry is configured to vary the drive frequency of the alternating drive voltage such that operation of the further electronic circuitry is not disturbed.

12. The vehicle according to claim 11, wherein the drive circuitry comprises a control unit, the control unit being configured to vary the drive frequency and the further electronic circuitry being operatively coupled to the control unit, and wherein the control device varies the drive frequency in dependence on an electromagnetic disturbance in the further electronic circuitry.

13. A method for reducing electromagnetic disturbances in a vehicle, wherein the vehicle comprises an optically switchable panel, the optically switchable panel being in a first optical state when no drive voltage is supplied to the optically switchable panel, the method comprising:
supplying an alternating drive voltage, the alternating drive voltage alternating at a drive frequency, to the optically switchable panel to switch the optically switchable panel from the first optical state to a second optical state;
varying the drive frequency of the alternating drive voltage to vary a radiation frequency of an electromagnetic radiation emitted by the optically switchable panel.
